# EUROPEAN PATENT SPECIFICATION

(11) **EP 1 190 999 B1**
(45) Date of publication and mention of the grant of the patent: **18.10.2006**
(21) Application number: 01307316.8
(22) Date of filing: 29.08.2001
(51) Int. Cl.: C04B 35/52, C04B 41/53, C04B 41/88

(54) **Machining of polycrystalline diamond**
Bearbeitung von polykristallinem Diamant
Usinage de diamant polycristallin

(30) Priority: 20.09.2000 US 234075 P; 02.04.2001 US 281054 P
(43) Date of publication of application: 27.03.2002
(73) Proprietor: Camco International (UK) Limited, Stonehouse, Gloucestershire GL10 3RQ (GB)
(72) Inventor: Griffin, Nigel Dennis, Whitminster Gloucester GL2 7PS (GB); Hughes, Peter Raymond, Stroud Gloucestershire GL5 4SG (GB)
(74) Representative: Bailey, Richard Alan

(56) References cited:
- EP-A- 0 857 537
- WO-A-00/28106

## Description

### BACKGROUND OF THE INVENTION

### 1. Technical Field.

This invention relates to machining techniques for use with polycrystalline diamond.

### 2. Description of Prior Art.

It is known, for example in the manufacture of cutters for earth boring drill bits, to form a relatively large diameter polycrystalline diamond component bonded to a substrate, and then to machine the component to cut the component into a plurality of pieces. This technique for use in the manufacture of cutters is described in, for example, US 6,011,232, EP 0857537 and, WO 00/28106.

The machining technique used in the manufacture of such a cutter is most often an electron discharge machine (EDM) technique, and relies upon the component being machined being of electrically conductive form. Generally, polycrystalline diamond components comprise a plurality of diamond crystals defining therebetween a matrix of interstices. The interstices usually contain a catalysing material, typically cobalt, used in the formation of the polycrystalline diamond and in bonding the diamond to the substrate. The presence of cobalt in the interstices renders the component electrically conductive and hence suitable for use with electron discharge machining techniques.

It has been found that the abrasion resistance of a polycrystalline diamond cutter can be increased by removing the catalysing material from a volume of the polycrystalline diamond close to a working surface thereof. Although treatment of the polycrystalline diamond to render the interstices close to the working surface substantially free of catalysing material improves the wear resistance, it also results in the part of the polycrystalline diamond close to the working surface being of poor electrical conductivity and hence electron discharge machining techniques cannot be used effectively in machining polycrystalline diamonds so treated.

It is an object of the invention to provide a technique whereby machining of such polycrystalline diamonds can be achieved in a simple and convenient manner.

### SUMMARY OF THE INVENTION

According to the present invention there is provided a machining method comprising treating a polycrystalline diamond component of the type including a volume close to a working surface which is substantially free of catalysing material to render the polycrystalline diamond electrically conductive, and using an electron discharge machining technique to machine the polycrystalline diamond material.

The polycrystalline diamond may be plated with an electrically conductive material to render it conductive. Alternatively, an infiltration technique may be used to infiltrate a conductive material into the interstices from which catalysing material has been removed to render the polycrystalline diamond electrically conductive.

Where a plating technique is used, the polycrystalline diamond may be plated with a layer of nickel or another metallic material.

Where an infiltration technique is used, the technique may involve vacuum impregnation of a conductive paint, a graphite suspension or another electrically conductive material into the interstices. Alteratively a pressure impregnation technique may be used with, for example, graphite or other electrically conductive media such as a mounting compound.

### BRIEF DESCRIPTION OF THE DRAWINGS

The invention will further be described, by way of example, with reference to the accompanying drawings, in which:
Figure 1 is a plan view of a polycrystalline diamond component;
Figure 2 is a side view of the component of Figure 1;
Figure 3 is a diagrammatic view illustrating the structure of part of the component of Figure 1; and
Figure 4 is a view similar to Figure 3 of an alternative arrangement.

### DETAILED DESCRIPTION OF THE INVENTION AND THE PREFERRED EMBODIMENTS

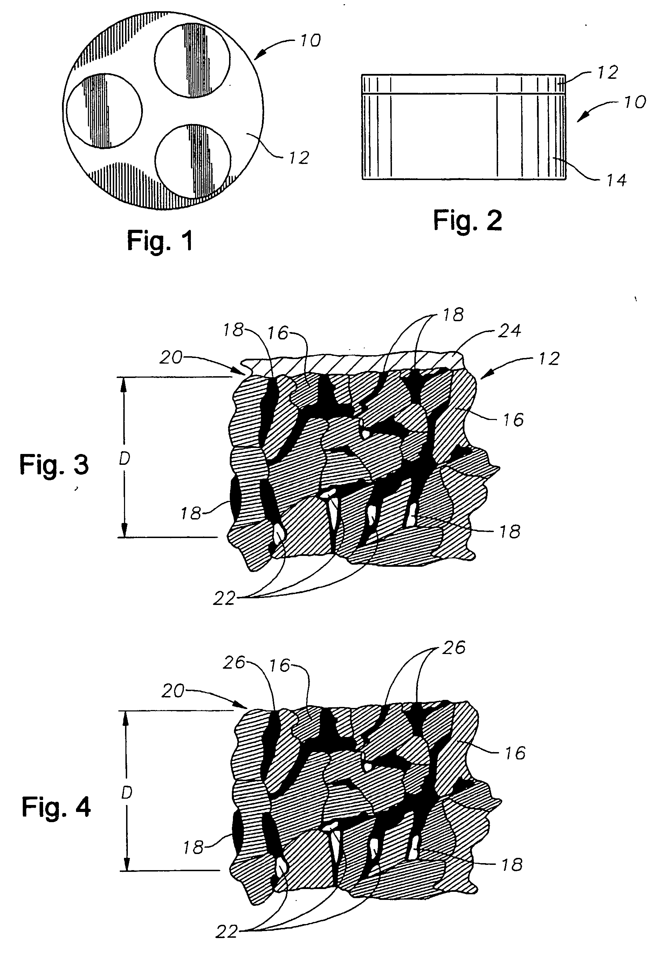

Figures 1 and 2 illustrate a component 10 intended for use in the formation of three cutters for use in earth boring drill bits. Although the invention will be described in relation to the formation of cutters for earth boring drill bits, the invention can be used in connection with other components, for example wire-drawing dies, bearing components or other components subject to wear, in use. The component 10 comprises a polycrystalline diamond table 12 bonded to a substrate 14 of tungsten carbide. The component is manufactured using a well known technique involving exposing a substrate, diamond powder and a catalyst to high temperature, high pressure conditions.

The polycrystalline diamond table 12 of a component 10 manufactured in this manner takes the form of diamond crystals which define therebetween a matrix of interstices containing the catalysing material. It has been found that, by appropriate treatment of the component 10 to remove the catalysing material from the interstices located within a volume close to a surface which, in the final product, will be a working surface thereof, the abrasion resistance can be improved. The removal of the catalysing material can be achieved in a number of ways. For example, the catalysing material can be leached from the component. Such leaching of the catalysing material leaves the component 10 with a layer or volume of porous form, as shown in Figure 3. The leaching of the catalysing material further results in the component 10 including a layer or volume of poor electrical conductivity with the result that electron discharge machining techniques cannot be used in machining the component.

In order to allow an electrical discharge machining technique to be used, in accordance with the invention the component is treated to render it electrically conductive.

Figure 3 illustrates part of the polycrystalline diamond table 12, showing that the table 12 is made up of diamond crystals 16 defining therebetween a matrix of interstices 18. Remote from a working surface 20, the interstices contain catalysing material in the form of cobalt 22, the interstices 18 closer to the working surface 20 being substantially free of cobalt as it has been leached from the diamond to a depth D.

In order to render the component electrically conductive, an electrically conductive material plating is applied to the component. In the arrangement illustrated the plating comprises a layer 24 of nickel applied using a conventional plating/deposition technique.

The provision of the layer 24 allows an electron discharge machining technique, for example a wire erosion EDM technique, to be used to cut from the component 10 three circular cutters.

Figure 4 illustrates part of a component 10 treated in another way to render it electrically conductive. In the arrangement of Figure 4, rather than apply a plating layer to the component, an infiltration technique is used to incorporate an electrically conductive material into the component 10. In Figure 4, the electrically conductive material is a graphite suspension 26 which has been infiltrated into the interstices using a vacuum impregnation technique. Alternatively, a conductive paint material could be used. As further alternatives, a pressure impregnation technique may be used with a conductive media such as a mounting compound or with graphite.

## Claims

1. A method for machining a polycrystalline diamond component, the polycrystalline diamond component including a matrix of interstices and wherein a volume close to a working surface thereof is substantially free of catalysing material, at least another part of the polycrystalline diamond component including catalysing material, comprising the steps of rendering the volume which is substantially free of catalysing material electrically conductive, and using an electron discharge machining technique to machine the polycrystalline diamond.

2. A method according to Claim 1, wherein the polycrystalline diamond component is treated by applying a layer of a conductive material to the working surface.

3. A method according to Claim 2, wherein the layer of a conductive material comprises a layer of nickel.

4. A method according to Claim 1, wherein the polycrystalline diamond component is treated to infiltrate a conductive material into the interstices of the volume close to the working surface.

5. A method according to Claim 4, wherein the polycrystalline diamond component is infiltrated using a pressure impregnation technique.

6. A method according to Claim 5, wherein the conductive material comprises one of an electrically conductive media and graphite.

7. A method according to Claim 4, wherein the polycrystalline diamond component is infiltrated using a vacuum impregnation technique.

8. A method according to Claim 7, wherein the conductive material comprises one of a graphite suspension and an electrically conductive point.

9. A method according to Claim 1, wherein the polycrystalline diamond component is bonded to a substrate, and the electron discharge machining technique is used to machine polycrystalline diamond cutters from the polycrystalline diamond.

10. A machinable polycrystalline diamond material comprising polycrystalline diamond defining a matrix of interstices containing a catalysing material, a volume of the polycrystalline diamond close to a working surface thereof being substantially free of catalysing material, and a layer of an electrically conductive material applied over at least part of the working surface.

11. A machinable polycrystalline diamond material comprising polycrystalline diamond defining a matrix of interstices containing a catalysing material, a volume of the polycrystalline diamond close to a working surface being substantially free of catalysing material, and an electrically conductive material located within the interstices of said volume.

## Patentansprüche

1. Verfahren zum Bearbeiten einer polykristallinen Diamantkomponente, wobei die polykristalline Diamantkomponente eine Matrix von Zwischenräumen enthält und wobei ein Volumen, welches sich nahe bei einer Arbeitsoberfläche derselben befindet, im Wesentlichen frei von katalysierendem Material ist und mindestens ein anderer Teil der polykristallinen Diamantkomponente ein katalysierendes Material enthält, Verfahren welches die darin bestehenden Schritte aufweist, das Volumen, welches im Wesentlichen frei von katalysierendem Material ist elektrisch leitfähig zu machen und eine auf einer Elektronenentladung beruhende Bearbeitungstechnik zu benutzen, um den polykristallinen Diamanten zu bearbeiten.

2. Verfahren gemäß Anspruch 1, bei welchem die polykristalline Diamantkomponente behandelt wird, indem eine Lage eines leitfähigen Materials auf die Arbeitsoberfläche aufgetragen wird.

3. Verfahren gemäß Anspruch 2, bei welchem die Lage eines leitfähigen Materials eine aus Nickel bestehende Lage aufweist.

4. Verfahren gemäß Anspruch 1, bei welchem die polykristalline Diamantkomponente behandelt wird, um ein leitfähiges Material in die Zwischenräume des Volumens nahe bei der Arbeitsoberfläche hinein zu schleusen.

5. Verfahren gemäß Anspruch 4, bei welchem die polykristalline Diamantkomponente unter Verwendung einer Druckimprägniertechnik eingeschleust wird.

6. Verfahren gemäß Anspruch 5, bei welchem das leitfähige Material eines von einem elektrisch leitfähigen Medium und von Graphit enthält.

7. Verfahren gemäß Anspruch 4, bei welchem die polykristalline Diamantkomponente unter Verwendung einer Vakuumimprägniertechnik eingeschleust wird.

8. Verfahren gemäß Anspruch 7, bei welchem das leitfähige Material eines von einer Graphitsuspension und von einem elektrisch leitfähigen Punkt enthält.

9. Verfahren gemäß Anspruch 1, bei welchem die polykristalline Diamantkomponente an ein Substrat gebunden ist und die Bearbeitungstechnik mittels Elektronenentladung verwendet wird, um polykristalline Diamantschneidelemente aus dem polykristallinen Diamanten zu bearbeiten

10. Bearbeitbares, polykristallines Diamantmaterial, welches einen polykristallinen Diamanten umfasst, welcher eine Matrix von Zwischenräumen definiert, welche ein katalysierendes Material enthalten, wobei ein Volumen des polykristallinen Diamanten nahe bei einer Arbeitsoberfläche desselben im Wesentlichen frei von katalysierendem Material ist und eine Lage eines elektrisch leitfähigen Materials über mindestens einen Teil der Arbeitsoberfläche aufgetragen wird.

11. Bearbeitbares, polykristallines Diamantmaterial, welches einen polykristallinen Diamanten umfasst, welcher eine Matrix von Zwischenräumen definiert, welche ein katalysierendes Material enthalten, wobei ein Volumen des polykristallinen Diamanten nahe bei einer Arbeitsoberfläche desselben im Wesentlichen frei von katalysierendem Material ist und ein elektrisch leitfähiges Material innerhalb der Zwischenräume des Volumens angeordnet ist.

## Revendications

1. Procédé pour l'usinage d'un composant de diamant polycristallin, le composant de diamant polycristallin incluant une matrice d'interstices et où un volume proche d'une surface de travail de celui-ci est substantiellement sans matériau de catalyse, au moins une autre partie du composant de diamant polycristallin incluant un matériau de catalyse, comprenant les étapes consistant à rendre le volume qui est substantiellement sans matériau de catalyse électriquement conducteur et à utiliser une technique d'usinage par décharge électronique pour usiner le diamant polycristallin.

2. Procédé suivant la revendication 1, dans lequel le composant de diamant polycristallin est traité en appliquant une couche d'un matériau conducteur sur la surface de travail.

3. Procédé suivant la revendication 2, dans lequel la couche d'un matériau conducteur comprend une couche de nickel.

4. Procédé suivant la revendication 1, dans lequel le composant de diamant polycristallin est traité pour infiltrer un matériau conducteur dans les interstices du volume proche de la surface de travail.

5. Procédé suivant la revendication 4, dans lequel le composant de diamant polycristallin est infiltré en employant une technique d'imprégnation sous pression.

6. Procédé suivant la revendication 5, dans lequel le matériau conducteur comprend un parmi un milieu électriquement conducteur et un graphite.

7. Procédé suivant la revendication 4, dans lequel le composant de diamant polycristallin est infiltré en employant une technique d'imprégnation sous vide.

8. Procédé suivant la revendication 7, dans lequel le matériau conducteur comprend un parmi une suspension de graphite et un point électriquement conducteur.

9. Procédé suivant la revendication 1, dans lequel le composant de diamant polycristallin est lié à un substrat et la technique d'usinage par décharge électronique est utilisée pour usiner des éléments de découpe de diamant polycristallin à partir du diamant polycristallin.

10. Matériau de diamant polycristallin usinable comprenant un diamant polycristallin définissant une matrice d'interstices contenant un matériau de catalyse, un volume du diamant polycristallin proche d'une surface de travail de celui-ci étant substantiellement sans matériau de catalyse, et une couche d'un matériau électriquement conducteur appliqué sur au moins une partie de la surface de travail.

11. Matériau de diamant polycristallin usinable comprenant un diamant polycristallin définissant une matrice d'interstices contenant un matériau de catalyse, un volume du diamant polycristallin proche d'une surface de travail étant substantiellement sans matériau de catalyse, et un matériau électriquement conducteur localisé dans les interstices dudit volume.
